# EUROPEAN PATENT SPECIFICATION

(11) **EP 3 989 219 B1**
(45) Date of publication and mention of the grant of the patent: **22.11.2023**
(21) Application number: 20203446.8
(22) Date of filing: 22.10.2020
(51) Int. Cl.: G10L 15/32, G10L 15/20, G10L 15/08

(54) **METHOD FOR DETECTING AN AUDIO ADVERSARIAL ATTACK WITH RESPECT TO A VOICE COMMAND PROCESSED BY AN AUTOMATIC SPEECH RECOGNITION SYSTEM, CORRESPONDING DEVICE, COMPUTER PROGRAM PRODUCT AND COMPUTER-READABLE CARRIER MEDIUM**
VERFAHREN ZUM ERKENNEN EINES FEINDLICHEN AUDIOANGRIFFS IN BEZUG AUF EINEN SPRACHBEFEHL, DER VON EINEM AUTOMATISCHEN SPRACHERKENNUNGSSYSTEM VERARBEITET WIRD, ENTSPRECHENDE VORRICHTUNG, COMPUTERPROGRAMMPRODUKT UND COMPUTERLESBARES TRÄGERMEDIUM
PROCÉDÉ DE DÉTECTION D'UNE ATTAQUE AUDIO ADVERSE CONCERNANT UNE COMMANDE VOCALE TRAITÉE PAR UN SYSTÈME DE RECONNAISSANCE AUTOMATIQUE DE LA PAROLE, DISPOSITIF, PRODUIT PROGRAMME INFORMATIQUE ET SUPPORT LISIBLE PAR ORDINATEUR CORRESPONDANTS

(43) Date of publication of application: 27.04.2022
(73) Proprietor: THOMSON LICENSING, 35510 Cesson-Sévigné (FR)
(72) Inventor: NADEAU, Pascal, 35576 Cesson-Sévigné (FR); GILBERTON, Philippe, 35576 Cesson-Sévigné (FR); GAUTIER, Eric, 35576 Cesson-Sévigné (FR); DELAUNAY, Christophe, 35576 Cesson-Sévigné (FR)
(74) Representative: Vidon Brevets & Stratégie

(56) References cited:
- US-A1- 2003 110 035
- US-A1- 2015 302 848
- US-A1- 2020 160 850
- ZHUOLIN YANG ET AL: "Characterizing Audio Adversarial Examples Using Temporal Dependency", ARXIV.ORG, CORNELL UNIVERSITY LIBRARY, 201 OLIN LIBRARY CORNELL UNIVERSITY ITHACA, NY 14853, 28 September 2018 (2018-09-28), XP081368300,

## Description

### Field of the disclosure

The present disclosure relates generally to the field of speech recognition. More particularly, the present disclosure relates to the field of automatic speech recognition systems, and pertains to a technique that allows detecting audio adversarial attack on such systems.

### Background

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

More and more devices, including general public consumer devices - such as smartphones, tablets, set-top box, speakers, television set - are now provided with speech recognition features, allowing their users to use voice commands to make these devices perform various tasks. For example, voice commands may be used to search the Internet, initiate a phone call, play a specific song on a speaker, control home automation devices such as connected lightning, connected door lock, etc.

The implementation of these speech recognition features, sometimes gathered under the name of "voice assistants" (among which stand out Apple's Siri, Microsoft's Cortana, Amazon's Alexa, Google Assistant, etc.), relies mostly on automatic speech recognition systems using machine-learning-based systems (such as, for example, neural networks or deep neural networks, which have demonstrated their effectiveness in this field) as computational core. An audio signal corresponding to the voice command is provided as an input of the machine-learning-based system, which has been trained so as to be able to output a transcript expected to be a word for word transcript of the voice command as originally spoken by the user.

However, it has been demonstrated that machine learning systems such as deep neural networks may be vulnerable to adversarial perturbations: for example, by intentionally adding specific but imperceptible perturbations on an input of a deep neural network, an attacker is able to generate an adversarial example specifically designed to mislead the neural network. In the context of automatic speech recognition systems, an original voice command may be hacked by being mixed with a more or less imperceptible malicious noise, without the user noticing it: the hacked speech sounds exactly the same to the user. Such a malicious noise may have been specifically constructed by the attacker so that the transcript outputted by the machine-learning-based system corresponds to a target command significantly different than the original one. This gives rise to serious security issues, since such audio adversarial attacks may be used to cause a device to execute malicious and unsolicited tasks, such as unwanted internet purchasing, unwanted control of connected objects acting on front door, windows, central heating unit, etc.

Document [1] provides an example for detection of audio adversarial attacks. Document [2] provides an example for joint use of phonetic transcriptions and of text from a speech recognition system for determining an enhanced recognized text.

Some solutions have been proposed in an attempt to counter these audio adversarial attacks. A first approach consists of enriching the training set of the automatic speech recognition system with sample phrases which are known to be hacked, so that the system can learn to reject them. A major drawback of this solution is that it engages the automatic speech recognition system designers in a never-ending race against hackers. A second approach consists of requiring an authentication of the user before an automatic speech recognition system accepts any commands from him. However, this solution has limitations. For example, once the user is authenticated, this technique doesn't allow determining whether the voice commands which are received afterwards are hacked or not. Another solution based on user authentication consists of training the automatic speech recognition system to recognize and accept only voice commands spoken with a specific voice, i.e. the user's voice. It then becomes harder for someone with a non-trained voice to take control over the device. However, this technique requires the user to train his new device before being able to use it, which may appear too constraining. A third approach consists of applying some transformations (e.g. mp3 compression, bit quantization, filtering, down-sampling, adding noise, etc.) on the audio input data in order to disrupt the adversarial perturbations before passing it to the machine-learning-based automatic speech recognition system. However, the transformations applied sometimes remain insufficient to counteract the attack. Furthermore, they may affect performance on benign samples. A fourth approach, focused on neural-network-based machine learning systems, is based on the assumption that adversarial noised samples produce anomalous activations in a neural network, and consists of searching for such anomalous activations in internal layers of the neural network in order to detect adversarial attacks. However, this solution is highly-dependent on the neural network architecture used to train the automatic speech recognition model. Furthermore, implementing such a solution may cause a significant increase of computational cost, which may affect the overall performance of the system.

It would hence be desirable to provide a technique that would avoid at least some of these drawbacks of the prior art, and that would notably allow an efficient detection of audio adversarial attacks at a low computational cost, making it possible to reject hacked speech while maintaining the highest possible accuracy of recognition of non-hacked speech. Furthermore, it would be desirable that the provided technique does not depend on the machine learning architecture used to train the automatic speech recognition model.
[1] ZHUOLIN YANG ET AL: "Characterizing Audio Adversarial Examples Using Temporal Dependency", ARXIV.ORG, CORNELL UNIVERSITY LIBRARY, 201 OLIN LIBRARY CORNELL UNIVERSITY ITHACA, NY 14853, 28 September 2018
[2] US 020/0160850 A1

### Summary

According to the present disclosure, a method for detecting an audio adversarial attack with respect to a voice command processed by an automatic speech recognition system is proposed. The method, implemented by a detection device connected to the automatic speech recognition system, includes: obtaining an audio signal associated with the voice command; performing a phonetic transcription of the audio signal, according to a phonetic transcription scheme, delivering a first character string; obtaining a transcript resulting from the processing, by the automatic speech recognition system, of the audio signal; performing a phonetic transcription of the transcript, according to the phonetic transcription scheme, delivering a second character string; computing a similarity score between the first character string and the second character string; and delivering a piece of data representative of a detection of an audio adversarial attack, as a function of a result of a comparison between the similarity score and a predetermined threshold. The proposed technique thus makes it possible to detect an audio adversarial attack in a simple and efficient manner, which is furthermore not dependent on the machine learning architecture used by the automatic speech recognition system, simply by computing a similarity score between well-targeted character strings, and comparing this similarity score to a predetermined threshold.

According to an embodiment the method includes performing a homogenization process on the first character string and on the second character string, before computing the similarity score between the first character string and the second character string.

According to a particular feature of this embodiment, the homogenization process includes removing, from the first character string and from the second character string, space characters and/or symbols associated with a silence according to the phonetic transcription scheme.

According to an embodiment, delivering a piece of data representative of a detection of an audio adversarial attack further takes into account a result of a comparison between the first character string and the second character string based on at least one additional metric.

According to a particular feature of this embodiment, the comparison based on at least one additional metric belongs to the group including a comparison of the number of syllables; a comparison of the number of silences; a comparison of the number of segments; and/or a comparison of the number of words.

According to an embodiment, obtaining the audio signal and performing a phonetic transcription of the audio signal, and obtaining the transcript and performing a phonetic transcription of the transcript are processed in parallel by the detection device.

According to an embodiment, the method further includes transmitting the piece of data representative of a detection of an audio adversarial attack to a communication device in charge of executing an action associated with the voice command.

According to an embodiment, computing the similarity score between the first character string and the second character string is performed by using an algorithm belonging to the group including but not limited to: a Levenshtein distance calculation algorithm; a NeedlemanWunch algorithm; a Smith-Waterman algorithm; a Jaro distance calculation algorithm; a Jaro Winkler distance calculation algorithm; a QGrams distance calculation algorithm; and a Chapman Length Deviation algorithm.

According to an embodiment, the phonetic transcription scheme belongs to the group including but not limited to: an ARPABET phonetic transcription scheme; a SAMPA phonetic transcription scheme; and a X-SAMPA phonetic transcription scheme.

The present disclosure also relates to a detection device for detecting an audio adversarial attack with respect to a voice command processed by an automatic speech recognition system. The detection device, connected to directly or indirectly to the automatic speech recognition system, includes at least one processor configured for: obtaining an audio signal associated with the voice command; performing a phonetic transcription of the audio signal, according to a phonetic transcription scheme, delivering a first character string; obtaining a transcript resulting from the processing, by the automatic speech recognition system, of the audio signal; performing a phonetic transcription of the transcript, according to the phonetic transcription scheme, delivering a second character string; computing a similarity score between the first character string and the second character string; and delivering a piece of data representative of a detection of an audio adversarial attack, as a function of a result of a comparison between the similarity score and a predetermined threshold.

According to an embodiment, the detection device is connected to or embedded into a communication device configured to process the voice command together with the automatic speech recognition system.

According to another embodiment, the detection device is located on a cloud infrastructure service, alongside with the automatic speech recognition system.

According to one implementation, the different steps of the method for detecting an audio adversarial attack with respect to a voice command processed by an automatic speech recognition system as described here above are implemented by one or more software programs or software module programs including software instructions intended for execution by at least one data processor of a detection device connected to directly or indirectly to the automatic speech recognition system.

Thus, another aspect of the present disclosure pertains to at least one computer program product downloadable from a communication network and/or recorded on a medium readable by a computer and/or executable by a processor, including program code instructions for implementing the method as described above. More particularly, this computer program product includes instructions to command the execution of the different steps of a method for detecting an audio adversarial attack with respect to a voice command processed by an automatic speech recognition system, as mentioned here above.

This program can use any programming language whatsoever and be in the form of source code, object code or intermediate code between source code and object code, such as in a partially compiled form or any other desirable form whatsoever.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

In addition, the present disclosure also concerns a non-transitory computer-readable medium including a computer program product recorded thereon and capable of being run by a processor, including program code instructions for implementing the above-described method for detecting an audio adversarial attack with respect to a voice command processed by an automatic speech recognition system.

The computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### Brief description of the drawings

Embodiments of the present disclosure can be better understood with reference to the following description and drawings, given by way of example, and in which:
- **Figure 1** is a flow chart for illustrating the general principle of the proposed technique for detecting an audio adversarial attack with respect to a voice command processed by an automatic speech recognition system, according to an embodiment of the present disclosure;
- **Figures 2a** and **2b** show an example of how the proposed technique makes it possible to differentiate between a situation where a voice command is not targeted by an audio adversarial attack (figure 2a) and a situation where the same voice command is targeted by an audio adversarial attack (figure 2b), according to an embodiment of the present disclosure;
- **Figure 3** is a schematic block diagram illustrating an example of a detection device for detecting an audio adversarial attack with respect to a voice command processed by an automatic speech recognition system, according to an embodiment of the present disclosure; and
- **Figures 4a, 4b and 4c** show different configurations for the location of a detection device, according to various embodiments of the present disclosure.

The components in the figures are not necessarily to scale, emphasis instead being placed upon illustrating the principles of the disclosure.

### Detailed description

The present disclosure relates to a method for detecting an audio adversarial attack with respect to a voice command processed by an automatic speech recognition system. As it will be described more fully hereafter with reference to the accompanying figures, the proposed technique is easy to implement, machine-learning-system-agnostic (i.e. independent of the machine learning architecture on which the automatic speech recognition system is based) and it makes it possible to determine in an effective way and at a low computational cost whether or not a voice command has been hacked and turned into an adversarial example. The detection may be achieved within a very short period of time, thus allowing preventing a malicious command associated with an adversarial example from being executed. This objective is reached, according to the general principle of the disclosure, by comparing character strings resulting from the phonetic transcriptions of a voice command, before and after it has been processed by a machine-learning-based automatic speech recognition system.

This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the scope of the disclosure as defined by the claims. In the drawings, like or similar elements are designated with identical reference signs throughout the several views thereof.

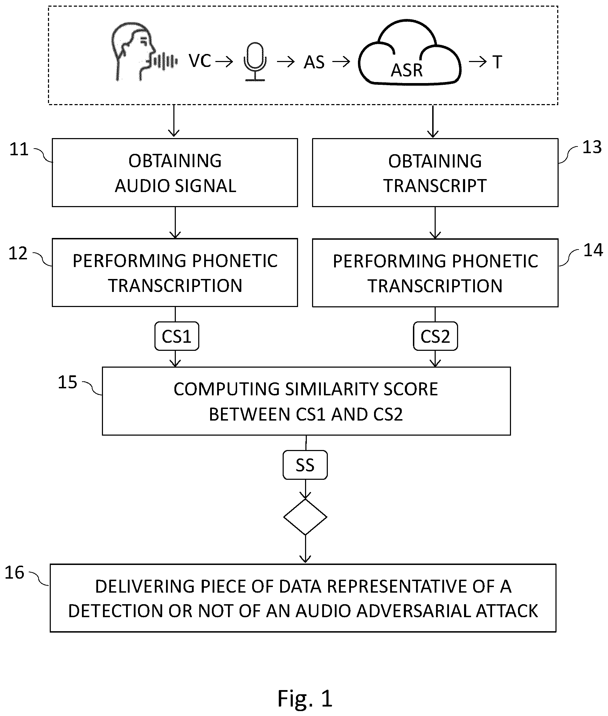

**Figure 1** is a flow chart for describing a method for detecting an audio adversarial attack with respect to a voice command VC processed by a machine-learning-based automatic speech recognition system ASR (such as for example a neural-network-based automatic speech recognition system), according to an embodiment of the present disclosure. The method is implemented by a detection device connected to the automatic speech recognition system ASR, either directly or through a communication device such as a communication device intended to execute the voice command for example. The detection device, which is further detailed in one embodiment later in this document, includes at least one processor adapted and configured for carrying out the steps described hereafter.

At step 11, the detection device obtains an audio signal AS associated with the voice command VC. The audio signal AS corresponds to the signal provided as an input of the automatic speech recognition system ASR for the processing of the voice command VC. The audio signal AS may for example be obtained from a microphone connected to or embedded in the detection device itself, or it may be received from a communication device intended to process the voice command VC along with the automatic speech recognition system ASR. By *"audio signal associated with the voice command",* it is meant here that the generation of the audio signal AS is linked to the voice command VC. In the typical case where the voice command VC is not subjected to an audio adversarial attack, the audio signal AS corresponds to a recording of the voice command VC (along with possible presence of a benign background noise). However, in case of an audio adversarial attack, the audio signal AS corresponds to a mix between the voice command VC and a more or less imperceptible malicious noise specifically designed by an attacker to mislead the machine-learning-based automatic speech recognition system. At this stage, such an attack has not been detected yet.

At step 12, the detection device performs a phonetic transcription of the audio signal AS, according to a phonetic transcription scheme. More particularly, according to an embodiment, the audio signal AS is sampled into audio samples that are then automatically converted to phonemes by using a phoneme dictionary associated with the considered phonetic transcription scheme. For example, ARPABET, SAMPA, or X-SAMPA may be used as phonetic transcription schemes suitable for processing the audio signal AS. During the processing carried out at step 12, no semantic or syntactic constraints are taken into consideration. According to an embodiment, this processing relies only on basic signal processing operations, and doesn't involve the use of a machine-learning-based system. Step 12 delivers a character string, referred to as a first character string CS1.

At step 13, the detection device obtains a transcript T resulting from the processing, by the automatic speech recognition system, of the audio signal AS. Depending on where the detection device is located, this transcript T may be obtained directly from the automatic speech recognition system, or it may be received through a communication device. In the case where the voice command VC is not the target of an audio adversarial attack, the output of the automatic speech recognition system is normally representative of a word for word transcript (or at least of a rather close word for word transcript) of the voice command VC as originally spoken by the user of the automatic speech recognition system. However, in case of an audio adversarial attack, the machine-learning-based system ruling the automatic speech recognition system is misled and outputs a transcript T that is not representative of the voice command VC. Depending on the attack, the transcript T may even be representative of a totally different command than the original one.

At step 14, a phonetic transcription of the transcript T delivered by the automatic speech recognition system is performed by the detection device, using the same phonetic transcription scheme than the one used at step 12. Phonetic transcriptions performed at steps 12 and 14 differ in that the one carried out at step 12 takes an audio signal (the audio signal AS) as an input whereas the one carried out at step 14 takes a text (the transcript T) as an input. However, as indicated above, both rely on the same phonetic transcription scheme. Step 14 delivers a character string, referred to as a second character string CS2.

Groups of steps 11 and 12 on the one hand and steps 13 and 14 on the other hand may be processed one after the other, whatever the order. However, according to an embodiment, considering the time needed by the automatic speech recognition system to process the audio signal, group of steps 13 and 14 may be processed after group of steps 11 and 12. According to a preferred embodiment, these two groups of steps (or at least some of their steps) are processed in parallel in order to save computing time.

At step 15, a similarity score SS between character strings CS1 and CS2 is computed. Various string-matching algorithms may be used to compute the similarity score SS, such as, for example, a Levenshtein distance calculation algorithm, a NeedlemanWunch algorithm, a Smith-Waterman algorithm, a Jaro distance calculation algorithm, a Jaro Winkler distance calculation algorithm, a QGrams distance calculation algorithm, a Chapman Length Deviation algorithm, etc.

According to an embodiment, a homogenization process is carried out on both character strings CS1 and CS2, before computing the similarity score SS. More particularly, the homogenization process may consist of removing, from the character strings CS1 and CS2, particular characters (including, for example, characters representative of specific annotations that are not part of the phoneme dictionary associated with the phonetic transcription scheme) and/or sequence of characters having a special meaning according to the phonetic transcription scheme. For example, according to an embodiment, the homogenization process comprises removing, from the first character string CS1 and from the second character string CS2, space characters and/or symbols associated with a silence according to the phonetic transcription scheme. Such a homogenization process may prove useful in alleviating the differences in the form that may result from the fact that character strings CS1 and CS2 are delivered respectively from different phonetic transcription processes that, though relying on a same phonetic transcription scheme, may not behave exactly the same. Furthermore, it allows taking into account the fact that silences and speech interruptions that may be present in the original voice command may be ignored and/or lost during the processing performed by the machine-learning-based system of the automatic speech recognition system.

At step 16, the computed similarity score SS is compared to a predetermined threshold, and a piece of data representative of whether or not an audio adversarial attack is detected is delivered as a function of the result of this comparison. Indeed, the similarity score makes it possible to quantify or at least estimate how much the voice command has been altered when processed by the automatic speech recognition system ASR. When no audio adversarial attack is going on, the transcript outputted from the automatic speech recognition system ASR is normally a rather close word for word transcript of the original voice command VC, and character strings CS1 and CS2 are thus quite similar. On the contrary, in presence of an audio adversarial attack, the command corresponding to the transcript outputted by the automatic speech recognition system has a high probability to be quite different from the original command, which results in character strings CS1 and CS2 being quite different too. According to an embodiment, the similarity score is a mathematical distance (such as the Levenshtein distance for example), and an audio adversarial attack with respect to the voice command is assumed to be going on if the computed distance is above the predetermined threshold. The piece of data representative of a detection of an audio adversarial attack may take the form of a boolean representing an attack status, which is set to true if an attack is detected and false otherwise.

According to an embodiment, in order to enhance adversarial attack detection, step 16 for delivering a piece of data representative of a detection of an audio adversarial attack may take into account at least one additional metric, in addition to the similarity score previously described. For example, the result of a comparison of a number of syllables, a number of silences, a number of segments (i.e. portions of speech between silences) and/or a number of words may also be taken into account. Comparisons based on these additional metrics may be performed between character strings CS1 and CS2 themselves, possibly before homogenization (e.g. for a comparison based on the number of syllables, segments and/or silences), or at a higher level, between the audio signal AS inputted in the automatic speech recognition system and the transcript T outputted from the automatic speech recognition system for example (e.g. for a comparison based on the number of syllables, and/or words). According to an embodiment, such comparisons based on at least one additional metrics are performed after the above-described comparison between the similarity score and a predetermined threshold, and only if said comparison based on the similarity score has not resulted in the detection of an adversarial attack. In such a case, a piece of data representative of the presence of an audio adversarial attack (attack status set to true) can still be delivered, if the comparisons based on the additional metrics highlight a different number of syllables, silences, segments and/or words between the compared items.

According to an embodiment, the method further comprises transmitting the piece of data representative of a detection of an audio adversarial attack to a communication device initially intended to execute the action associated with the original voice command VC. In that way, the communication device may be warned when an attack is detected, and therefore be in position to block the execution of the malicious command which has replaced the original command as an effect of the adversarial attack.

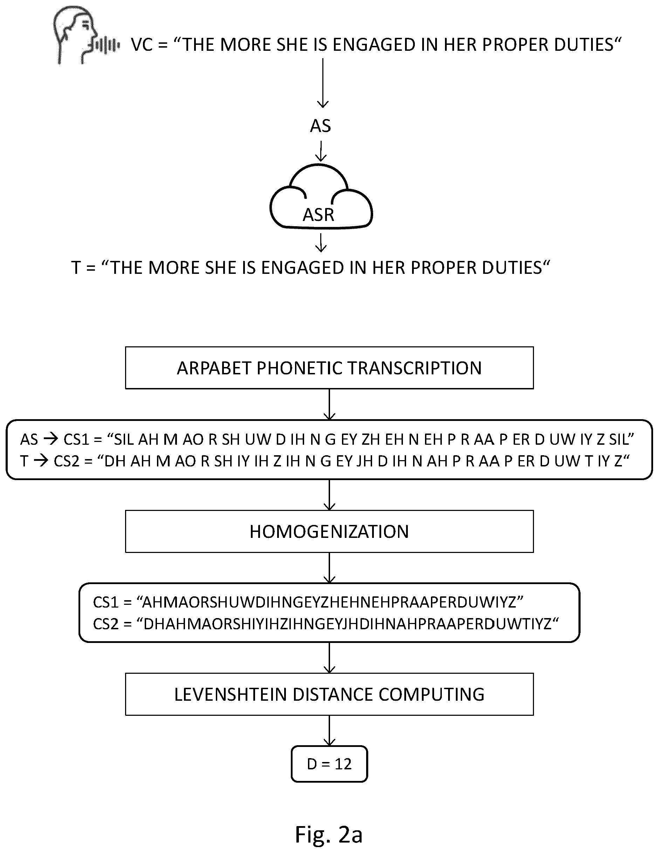

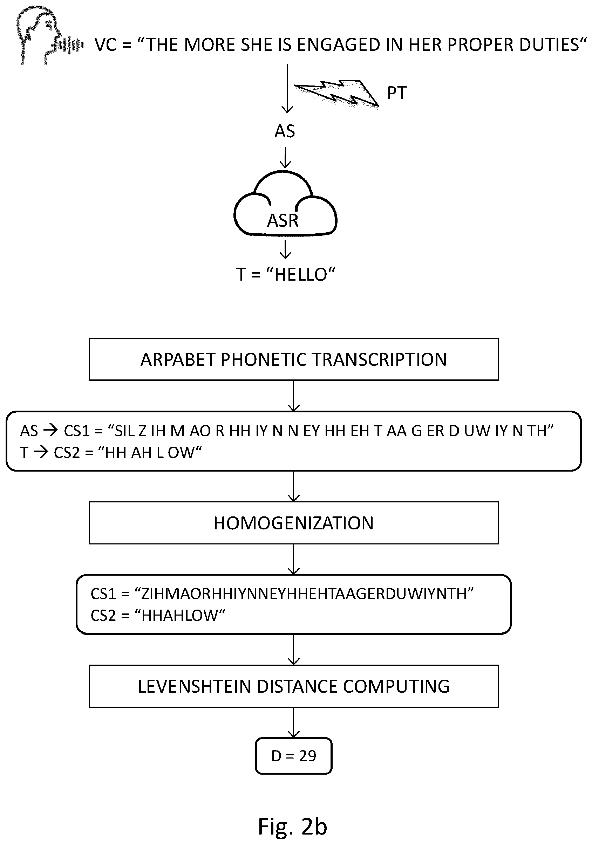

**Figure 2a** **and** **2b** illustrate more precisely an example of how the technique described in relation with figure 1 makes it possible to detect an audio adversarial attack. More particularly, figure 2a describes a situation in which no audio adversarial attack is going on, whereas figure 2b describes a situation in which an audio adversarial attack is going on, with respect to a same voice command VC. In both examples, the voice command VC as spoken by a user is the following "the *more she is engaged in her proper duties".* It should be understood that this sentence is only used as an illustrative and non-limitative example to describe the general principle of the proposed technique, which of course remains the same with another sentence that may be considered as more representative of a command, such as for example "call the school", or "set a timer to five minutes". In the examples of figures 2a and 2b, ARPABET is used as the phonetic transcription scheme to generate character strings CS1 and CS2, and the Levenshtein distance is used as a similarity score to compare character strings CS1 and CS2 (the more the distance is, the less character strings CS1 and CS2 are similar).

In the situation depicted on figure 2a, since no audio adversarial attack is going on, no malicious noise has been added to the voice command VC. The automatic speech recognition system ASR thus processes an audio signal AS which corresponds to the voice command VC, and delivers as a result a word for word transcript T of the voice command VC. The ARPABET phonetic transcriptions of the audio signal AS on the one hand and of the transcript T on the other hand respectively deliver character strings CS1 and CS2, which go through a homogenization process where spaces and symbol "SIL" (the ARPABET abbreviation for a silence) are deleted. The Levenshtein distance D between homogenized character strings CS1 and CS2 is then computed, giving a result of D=12 in the example of figure 2a.

In the situation depicted on figure 2b, an audio adversarial attack is going on, and a malicious noise PT is added by an attacker to the original voice command VC, without the user noticing it. As a result, the audio signal AS doesn't correspond to the voice command VC, but instead to a mix between voice command VC and malicious noise PT. However, malicious noise PT may have been designed so that the audio signal AS sounds the same than the original voice command VC to a human ear. Because of the presence of this malicious noise PT, the automatic speech recognition system ASR is misled and output a transcript T corresponding to the command "hello", which has no longer anything to do with the original voice command VC as spoken by the user (here again, outputted command "hello" is only used as an illustrative and non-limitative example that may sounds quite harmless, but it should be understood that the malicious noise may have been specifically constructed so that the fooled machine-learning-based system, e.g. a deep neural network, outputs another command that may cause serious security problems, such as "open the front door" for example). Similarly to operations already described in relation with figure 2a, ARPABET phonetic transcriptions of the audio signal AS on the one hand and of the transcript T on the other hand are performed, respectively delivering character strings CS1 and CS2, which then go through a homogenization process, before the Levenshtein distance D between homogenized character strings CS1 and CS2 is finally computed, giving a result of D=29 in the example of figure 2b. As one can note, the distance computed in the example of figure 2b is significantly higher than the distance computed in the example of figure 2a, thus demonstrating how such a distance can be used as a detection criterion for detecting an audio adversarial attack.

The examples of figures 2a and 2b thus illustrate how the proposed technique makes it possible to detect an audio adversarial attack in a simple and efficient manner, which is furthermore not dependent on the machine learning architecture used by the automatic speech recognition system, simply by computing a similarity score between well-targeted character strings, and comparing this similarity score to a predetermined threshold.

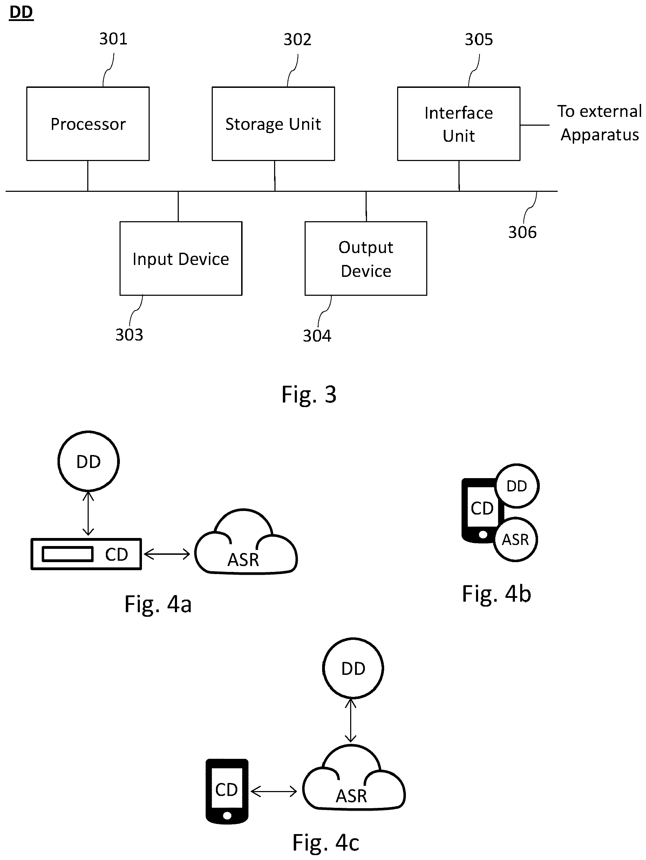

**Figure 3** shows a schematic block diagram illustrating an example of a detection device DD for detecting an audio adversarial attack with respect to a voice command processed by an automatic speech recognition system, according to an embodiment of the present disclosure. As illustrated in relation with **figures 4a, 4b and 4c****,** the detection device DD may be deployed locally or located in a cloud infrastructure. In some embodiments, the detection device DD is connected to (as a standalone device, as depicted for example on figure 4a) or embedded into (as a component, as depicted for example on figure 4b) a communication device CD configured for processing voice commands together with a machine-learning-based automatic speech recognition system ASR. The communication device CD may be for example a smartphone, a tablet, a computer, a speaker, a set-top box, a television set, a home gateway, etc., embedding voice recognition features. The automatic speech recognition system ASR may be implemented as a component of the communication device CD itself (as depicted on figure 4b), or, alternatively, be located in the cloud and accessible over a communication network, as a mutualised resource shared between a plurality of communication devices (as depicted on figure 4a or 4c, for example). In another embodiment, depicted on figure 4c, the detection device DD is implemented on a cloud infrastructure service, alongside with a distant automatic speech recognition service for example. Whatever the embodiment considered, the detection device DD is connected to an automatic speech recognition system, either directly or indirectly through a communication device.

Referring back to figure 3, the detection device DD includes a processor 301, a storage unit 302, an input device 303, an output device 304, and an interface unit 305 which are connected by a bus 306. Of course, constituent elements of the device DD may be connected by a connection other than a bus connection using the bus 306.

The processor 301 controls operations of the detection device DD. The storage unit 302 stores at least one program to be executed by the processor 301, and various data, including for example parameters used by computations performed by the processor 301, intermediate data of computations performed by the processor 301 such as the first and second character strings obtained as an output of the phonetic transcriptions steps, and so on. The processor 301 is formed by any known and suitable hardware, or software, or a combination of hardware and software. For example, the processor 301 is formed by dedicated hardware such as a processing circuit, or by a programmable processing unit such as a CPU (Central Processing Unit) that executes a program stored in a memory thereof.

The storage unit 302 is formed by any suitable storage or means capable of storing the program, data, or the like in a computer-readable manner. Examples of the storage unit 302 include non-transitory computer-readable storage media such as semiconductor memory devices, and magnetic, optical, or magneto-optical recording media loaded into a read and write unit. The program causes the processor 301 to perform a method for detecting an audio adversarial attack with respect to a voice command processed by an automatic speech recognition system according to an embodiment of the present disclosure as described previously. More particularly, the program causes the processor 301 to perform phonetic transcriptions of the audio signal provided as an input of the automatic speech recognition system on the one hand and of the transcript delivered as an output of the automatic speech recognition system on the other hand, and to compute a similarity score between the two character strings resulting from these phonetic transcriptions.

The input device 303 is formed for example by a microphone.

The output device 304 is formed for example by a processing unit configured to take decision regarding whether or not an audio adversarial attack is considered as detected, as a function of the result of the comparison between the computed similarity score and a predetermined threshold.

The interface unit 305 provides an interface between the detection device DD and an external apparatus and/or system. The interface unit 305 is typically a communication interface allowing the detection device to communicate with an automatic speech recognition system and/or with a communication device, as already presented in relation with figures 4a, 4b and 4c. The interface unit 305 may be used to obtain the audio signal provided as an input of the automatic speech recognition system and the transcript delivered as an output of the automatic speech recognition system. The interface unit 305 may also be used to transmit an attack status to the automatic speech recognition system and/or to a communication device expected to execute a voice command.

Although only one processor 301 is shown on figure 3, it must be understood that such a processor may include different modules and units embodying the functions carried out by device DD according to embodiments of the present disclosure. These modules and units may also be embodied in several processors 301 communicating and co-operating with each other.

While the disclosure has been described with reference to exemplary embodiments, it is to be understood that the disclosure can be embodied in various forms, and is not to be limited to the examples discussed above.

## Claims

1. A method for detecting an audio adversarial attack with respect to a voice command (VC) processed by an automatic speech recognition system (ASR), the method being implemented by a detection device connected to the automatic speech recognition system, **wherein** the method comprises:
obtaining (11) an audio signal (AS) associated with the voice command;
performing (12) a phonetic transcription of the audio signal, according to a phonetic transcription scheme, delivering a first character string (CS1);
obtaining (13) a transcript (T) resulting from the processing, by the automatic speech recognition system, of the audio signal;
performing (14) a phonetic transcription of the transcript, according to the phonetic transcription scheme, delivering a second character string (CS2);
computing (15) a similarity score (SS) between the first character string (CS1) and the second character string (CS2); and
delivering (16) a piece of data representative of a detection of an audio adversarial attack, as a function of a result of a comparison between the similarity score (SS) and a predetermined threshold.

2. The method according to claim 1, **wherein** the method comprises performing a homogenization process on the first character string and on the second character string, before computing the similarity score between the first character string and the second character string.

3. The method according to claim 2, **wherein** the homogenization process comprises removing, from the first character string and from the second character string, space characters and/or symbols associated with a silence according to the phonetic transcription scheme.

4. The method according to claim 1, **wherein** delivering (16) a piece of data representative of a detection of an audio adversarial attack further takes into account a result of a comparison between the first character string (CS1) and the second character string (CS2) based on at least one additional metric.

5. The method according to claim 4, **wherein** the comparison based on at least one additional metric belongs to the group comprising:
a comparison of the number of syllables;
a comparison of the number of silences;
a comparison of the number of segments; and
a comparison of the number of words.

6. The method according to claim 1, **wherein** obtaining (11) the audio signal and performing (12) a phonetic transcription of the audio signal, and obtaining (13) the transcript and performing (12) a phonetic transcription of the transcript are processed in parallel by the detection device.

7. The method according to claim 1, **wherein** the method further comprises transmitting the piece of data representative of a detection of an audio adversarial attack to a communication device in charge of executing an action associated with the voice command.

8. The method according to claim 1, **wherein** computing the similarity score between the first character string and the second character string is performed by using an algorithm belonging to the group comprising:
a Levenshtein distance calculation algorithm;
a NeedlemanWunch algorithm;
a Smith-Waterman algorithm;
a Jaro distance calculation algorithm;
a Jaro Winkler distance calculation algorithm;
a QGrams distance calculation algorithm; and
a Chapman Length Deviation algorithm.

9. The method according to claim 1, wherein the phonetic transcription scheme belongs to the group comprising:
an ARPABET phonetic transcription scheme;
a SAMPA phonetic transcription scheme; and
a X-SAMPA phonetic transcription scheme.

10. A detection device for detecting an audio adversarial attack with respect to a voice command processed by an automatic speech recognition system, the detection device being connected to the automatic speech recognition system, **wherein** the detection device comprises at least one processor configured for: obtaining an audio signal associated with the voice command;
performing a phonetic transcription of the audio signal, according to a phonetic transcription scheme, delivering a first character string;
obtaining a transcript resulting from the processing, by the automatic speech recognition system, of the audio signal;
performing a phonetic transcription of the transcript, according to the phonetic transcription scheme, delivering a second character string;
computing a similarity score between the first character string and the second character string; and
delivering a data representative of a detection of an audio adversarial attack, as a function of a result of a comparison between the similarity score and a predetermined threshold.

11. A communication device configured to process a voice command together with an automatic speech recognition system, **wherein** the communication device comprises a detection device according to claim 10.

12. A cloud infrastructure service comprising an automatic speech recognition system, **wherein** the cloud infrastructure service further comprises a detection device according to claim 10.

13. A computer program product comprising instructions which, when the computer program is executed by a processor, cause the processor to carry out the method according to any one of claims 1 to 9.

14. A non-transitory computer-readable medium comprising a computer program product recorded thereon, the computer program product comprising instructions which, when the program is executed by a processor, cause the processor to carry out the method according to any one of claims 1 to 9.

## Patentansprüche

1. Verfahren zum Detektieren eines feindlichen Audioangriffs in Bezug auf einen Stimmbefehl (VC), der durch ein automatisches Spracherkennungssystem (ASR) verarbeitet wird, wobei das Verfahren durch eine Detektionsvorrichtung implementiert wird, die mit dem automatischen Spracherkennungssystem verbunden ist, **wobei** das Verfahren umfasst:
Erhalten (11) eines Audiosignals (AS), das dem Stimmbefehl zugeordnet ist;
Ausführen (12) einer phonetischen Transkription des Audiosignals in Übereinstimmung mit einem phonetischen Transkriptionsschema, was eine erste Zeichenfolge (CS1) liefert;
Erhalten (13) eines Transkripts (T), das sich aus der Verarbeitung des Audiosignals durch das automatische Spracherkennungssystem ergibt,
Ausführen (14) einer phonetischen Transkription des Transkripts in Übereinstimmung mit dem phonetischen Transkriptionsschema, was eine zweite Zeichenfolge (CS2) liefert;
Berechnen (15) einer Ähnlichkeitsbewertung (SS) zwischen der ersten Zeichenfolge (CS1) und der zweiten Zeichenfolge (CS2); und
Liefern (16) eines Datenelements, das eine Detektion eines feindlichen Audioangriffs repräsentiert, in Abhängigkeit von einem Ergebnis eines Vergleichs zwischen der Ähnlichkeitsbewertung (SS) und einem vorgegebenen Schwellenwert.

2. Verfahren nach Anspruch 1, **wobei** das Verfahren das Ausführen eines Homogenisierungsprozesses an der ersten Zeichenfolge und an der zweiten Zeichenfolge vor Berechnen der Ähnlichkeitsbewertung zwischen der ersten Zeichenfolge und der zweiten Zeichenfolge umfasst.

3. Verfahren nach Anspruch 2, **wobei** der Homogenisierungsprozess das Entfernen von Zwischenraumzeichen und/oder Symbolen, die einer Sprechpause zugeordnet sind, aus der ersten Zeichenfolge und aus der zweiten Zeichenfolge in Übereinstimmung mit dem phonetischen Transkriptionsschema umfasst.

4. Verfahren nach Anspruch 1, **wobei** das Liefern (16) eines Datenelements, das eine Detektion eines feindlichen Audioangriffs repräsentiert, ferner ein Ergebnis eines Vergleichs zwischen der ersten Zeichenfolge (CS1) und der zweiten Zeichenfolge (CS2) auf der Grundlage mindestens einer zusätzlichen Metrik berücksichtigt.

5. Verfahren nach Anspruch 4, **wobei** der Vergleich auf der Grundlage mindestens einer zusätzlichen Metrik zu der Gruppe gehört, die umfasst:
einen Vergleich der Anzahl von Silben;
einen Vergleich der Anzahl von Sprechpausen;
einen Vergleich der Anzahl von Teilwörtern; und
einen Vergleich der Anzahl von Wörtern.

6. Verfahren nach Anspruch 1, **wobei** das Erhalten (11) des Audiosignals und das Ausführen (12) einer phonetischen Transkription des Audiosignals und das Erhalten (13) des Transkripts und das Ausführen (12) einer phonetischen Transkription des Transkripts durch die Detektionsvorrichtung parallel verarbeitet werden.

7. Verfahren nach Anspruch 1, **wobei** das Verfahren ferner das Senden des Datenelements, das eine Detektion eines feindlichen Audioangriffs repräsentiert, an eine Kommunikationsvorrichtung, die für das Ausführen einer dem Stimmbefehl zugeordneten Aktion verantwortlich ist, umfasst.

8. Verfahren nach Anspruch 1, **wobei** das Berechnen der Ähnlichkeitsbewertung zwischen der ersten Zeichenfolge und der zweiten Zeichenfolge unter Verwendung eines Algorithmus ausgeführt wird, der zu der Gruppe gehört, die umfasst:
einen Levenshtein-Distanzberechnungsalgorithmus;
einen Needleman-Wunsch-Algorithmus;
einen Smith-Waterman-Algorithmus;
einen Jaro-Distanzberechnungsalgorithmus;
einen Jaro-Winkler-Distanzberechnungsalgorithmus;
einen Q-Grams-Distanzberechnungsalgorithmus; und
einen Chapman-Längenabweichungsalgorithmus.

9. Verfahren nach Anspruch 1, wobei das phonetische Transkriptionsschema zu der Gruppe gehört, die umfasst:
ein phonetisches ARPABET-Transkriptionsschema;
ein phonetisches SAMPA-Transkriptionsschema; und
ein phonetisches X-SAMPA-Transkriptionsschema.

10. Detektionsvorrichtung zum Detektieren eines feindlichen Audioangriffs in Bezug auf einen Stimmbefehl, der durch ein automatisches Spracherkennungssystem verarbeitet wird, wobei die Detektionsvorrichtung mit dem automatischen Spracherkennungssystem verbunden ist, **wobei** die Detektionsvorrichtung mindestens einen Prozessor umfasst, der konfiguriert ist zum:
Erhalten eines Audiosignals, das dem Stimmbefehl zugeordnet ist;
Ausführen einer phonetischen Transkription des Audiosignals in Übereinstimmung mit einem phonetischen Transkriptionsschema, was eine erste Zeichenfolge liefert;
Erhalten eines Transkripts, das sich aus der Verarbeitung des Audiosignals durch das automatische Spracherkennungssystem ergibt,
Ausführen einer phonetischen Transkription des Transkripts in Übereinstimmung mit dem phonetischen Transkriptionsschema, was eine zweite Zeichenfolge liefert;
Berechnen einer Ähnlichkeitsbewertung zwischen der ersten Zeichenfolge und der zweiten Zeichenfolge; und
Liefern von Daten, die eine Detektion eines feindlichen Audioangriffs repräsentieren, in Abhängigkeit von einem Ergebnis eines Vergleichs zwischen der Ähnlichkeitsbewertung und einem vorgegebenen Schwellenwert.

11. Kommunikationsvorrichtung, die dafür konfiguriert ist, zusammen mit einem automatischen Spracherkennungssystem einen Stimmbefehl zu verarbeiten, **wobei** die Kommunikationsvorrichtung eine Detektionsvorrichtung nach Anspruch 10 umfasst.

12. Cloud-Infrastrukturdienst, der ein automatisches Spracherkennungssystem umfasst, **wobei** der Cloud-Infrastrukturdienst ferner eine Detektionsvorrichtung nach Anspruch 10 umfasst.

13. Computerprogrammprodukt, das Anweisungen umfasst, die veranlassen, dass der Prozessor das Verfahren nach einem der Ansprüche 1 bis 9 ausführt, wenn das Computerprogramm durch einen Computer ausgeführt wird.

14. Nichttransitorisches computerlesbares Medium, das ein darin aufgezeichnetes Computerprogrammprodukt umfasst, wobei das Computerprogrammprodukt Anweisungen umfasst, die veranlassen, dass der Prozessor das Verfahren nach einem der Ansprüche 1 bis 9 ausführt, wenn das Programm durch einen Prozessor ausgeführt wird.

## Revendications

1. Procédé de détection d'une attaque audio adverse concernant une commande vocale (VC) traitée par un système de reconnaissance automatique de la parole (ASR), le procédé étant mis en œuvre par un dispositif de détection connecté au système de reconnaissance automatique de la parole, dans lequel le procédé comprend :
l'obtention (11) d'un signal audio (AS) associé à la commande vocale ;
la réalisation (12) d'une transcription phonétique du signal audio, selon un schéma de transcription phonétique, fournissant une première chaîne de caractères (CS1) ;
l'obtention (13) d'une transcription (T) résultant du traitement, par le système de reconnaissance automatique de la parole, du signal audio ;
la réalisation (14) d'une transcription phonétique de la transcription, selon le schéma de transcription phonétique, fournissant une deuxième chaîne de caractères (CS2) ;
le calcul (15) d'un score de similarité (SS) entre la première chaîne de caractères (CS1) et la deuxième chaîne de caractères (CS2) ; et
la fourniture (16) d'un élément de données représentatif d'une détection d'une attaque audio adverse, en fonction d'un résultat d'une comparaison entre le score de similarité (SS) et un seuil prédéterminé.

2. Procédé selon la revendication 1, dans lequel le procédé comprend la réalisation d'un processus d'homogénéisation sur la première chaîne de caractères et sur la deuxième chaîne de caractères, avant de calculer le score de similarité entre la première chaîne de caractères et la deuxième chaîne de caractères.

3. Procédé selon la revendication 2, dans lequel le processus d'homogénéisation comprend la suppression, de la première chaîne de caractères et de la deuxième chaîne de caractères, d'espaces et/ou de symboles associés à un silence selon le schéma de transcription phonétique.

4. Procédé selon la revendication 1, dans lequel la fourniture (16) d'un élément de données représentatif d'une détection d'une attaque audio adverse prend en compte en outre un résultat d'une comparaison entre la première chaîne de caractères (CS1) et la deuxième chaîne de caractères (CS2) sur la base d'au moins une métrique supplémentaire.

5. Procédé selon la revendication 4, dans lequel la comparaison basée sur au moins une métrique supplémentaire appartient au groupe comprenant :
une comparaison du nombre de syllabes ;
une comparaison du nombre de silences ;
une comparaison du nombre de segments ; et
une comparaison du nombre de mots.

6. Procédé selon la revendication 1, dans lequel l'obtention (11) du signal audio et la réalisation (12) d'une transcription phonétique du signal audio, et l'obtention (13) de la transcription et la réalisation (12) d'une transcription phonétique de la transcription sont traitées en parallèle par le dispositif de détection.

7. Procédé selon la revendication 1, dans lequel le procédé comprend en outre la transmission de l'élément de données représentatif d'une détection d'une attaque audio adverse à un dispositif de communication chargé d'exécuter une action associée à la commande vocale.

8. Procédé selon la revendication 1, dans lequel le calcul du score de similarité entre la première chaîne de caractères et la deuxième chaîne de caractères est réalisé en utilisant un algorithme appartenant au groupe comprenant :
un algorithme de calcul de distance de Levenshtein ;
un algorithme de NeedlemanWunch ;
un algorithme de Smith-Waterman ;
un algorithme de calcul de distance de Jaro ;
un algorithme de calcul de distance de Jaro Winkler ;
un algorithme de calcul de distance QGrams ; et
un algorithme d'écart de longueur de Chapman.

9. Procédé selon la revendication 1, dans lequel le schéma de transcription phonétique appartient au groupe comprenant :
un schéma de transcription phonétique ARPABET ;
un schéma de transcription phonétique SAMPA ; et
un schéma de transcription phonétique X-SAMPA.

10. Dispositif de détection pour détecter une attaque audio adverse concernant une commande vocale traitée par un système de reconnaissance automatique de la parole, le dispositif de détection étant connecté au système de reconnaissance automatique de la parole, dans lequel le dispositif de détection comprend au moins un processeur configuré pour :
obtenir un signal audio associé à la commande vocale ;
réaliser une transcription phonétique du signal audio, selon un schéma de transcription phonétique, fournissant une première chaîne de caractères ;
obtenir une transcription résultant du traitement, par le système de reconnaissance automatique de la parole, du signal audio ;
réaliser une transcription phonétique de la transcription, selon le schéma de transcription phonétique, fournissant une deuxième chaîne de caractères ;
calculer un score de similarité entre la première chaîne de caractères et la deuxième chaîne de caractères ; et
fournir une donnée représentative d'une détection d'une attaque audio adverse, en fonction d'un résultat d'une comparaison entre le score de similarité et un seuil prédéterminé.

11. Dispositif de communication configuré pour traiter une commande vocale ensemble avec un système de reconnaissance automatique de la parole, dans lequel le dispositif de communication comprend un dispositif de détection selon la revendication 10.

12. Service d'infrastructure dans le nuage comprenant un système de reconnaissance automatique de la parole, dans lequel le service d'infrastructure dans le nuage comprend en outre un dispositif de détection selon la revendication 10.

13. Produit programme informatique comprenant des instructions qui, lorsque le programme informatique est exécuté par un processeur, amènent le processeur à réaliser le procédé selon l'une quelconque des revendications 1 à 9.

14. Support non transitoire lisible par ordinateur comprenant un produit programme informatique enregistré sur celui-ci, le produit programme informatique comprenant des instructions qui, lorsque le programme est exécuté par un processeur, amènent le processeur à réaliser le procédé selon l'une quelconque des revendications 1 à 9.
